# EUROPEAN PATENT SPECIFICATION

(11) **EP 0 498 489 B1**
(45) Date of publication and mention of the grant of the patent: **07.09.1994**
(21) Application number: 92200242.3
(22) Date of filing: 28.01.1992
(51) Int. Cl.: C10M 143/12, C10L 1/16, C08F 8/00, C08F 297/04

(54) **Oil compositions containing functionalised polymers**
Funktionalisierte Polymere enthaltende Ölzusammensetzungen
Compositions d'huile contenant des polymères fonctionnalisés

(30) Priority: 30.01.1991 US 650376
(43) Date of publication of application: 12.08.1992
(73) Proprietor: SHELL INTERNATIONALE RESEARCH MAATSCHAPPIJ B.V., 2596 HR Den Haag (NL)
(72) Inventor: Soni, Vivek Krishna, Peabody, Massachusetts 01960 (US); Handlin Jr., Dale Lee, Houston, Texas 77077 (US); Willis, Carl Lesley, Houston, Texas 77084 (US)

(56) References cited:
- EP-A- 0 215 501
- EP-A- 0 329 254
- EP-A- 0 458 415

## Description

This invention relates to oil compositions containing functionalised polymers, and more particularly to oil compositions containing functionalised polymers as viscosity index (VI) improvers.

It is well known that the viscosity of lubricating oils varies with temperature, and since lubricating oils are generally exposed to a relatively broad temperature range during use, it is important that the oil not be too viscous (thick) at low temperature nor too fluid (thin) at high temperatures. In this regard, variation in the viscosity-temperature relationship of an oil is indicated by the so-called viscosity index (VI). The higher the viscosity index, the less the change in viscosity with temperature. In general, the viscosity index is a function of the oil viscosity at a given lower temperature and a given higher temperature. In the United States of America, the given lower temperature and the given higher temperature for automotive lubricating oils are fixed by the test procedure ASTM D 2270. Currently the lower temperature specified in this test procedure is 40 °C and the higher temperature is 100 °C.

Various methods have been proposed for improving the rheological properties of lubricating oil compositions. Frequently these methods involve the use of one or more polymeric additives. Methods wherein the polymeric additive is a linear or branched chain polymer, are disclosed, for example, in U.S. Patents Nos. 3,554,911; 3,668,125; 3,772,196; 3,775,329 and 3,835,053. The polymeric additives disclosed in these U.S. Patents are, generally, hydrogenated, linear or substantially linear polymers of one or more conjugated diolefins which may, optionally, also contain monomeric units of one or more monoalkenyl aromatic hydrocarbons. Polymers of the type disclosed in this series of patents are typically prepared via the anionic solution polymerisation of the monomers followed by hydrogenation. A selectively hydrogenated, linear block copolymer comprising a single styrene polymer block and a single selectively hydrogenated isoprene polymer block, which block copolymer is according to U.S. Patent No. 3,772,196, is available commercially and is commonly used as a VI improver.

Methods wherein the polymeric additive is a star-shaped (radial) polymer are disclosed, for example, in U.S. Patents Nos. 4,077,893; 4,116,917; 4,141,847; 4,156,673; and 4,427,834. The polymeric additives disclosed in these patents are, generally, star-shaped (radial) polymers wherein all, or at least most, of the polymer arms are either homopolymers or copolymers of conjugated diolefins or copolymers of one or more conjugated diolefins and one or more monoalkenyl aromatic hydrocarbons. In certain of these polymeric additives, however, one or more arms are either modified or different. Polymers wherein all of the arms are either hydrogenated homopolymers or copolymers of one or more conjugated diolefins, selectively hydrogenated copolymers of one or more conjugated diolefins and one or more monoalkenyl aromatic hydrocarbons are described in U.S. Patents Nos. 4,116,917 and 4,156,673. Star polymers of the type disclosed in U.S. Patents Nos. 4,116,917 and 4,156,673 which are modified to incorporate functional groups imparting dispersant characteristics are disclosed in U.S. Patents Nos. 4,077,893, 4,141,847 and 4,427,834. The polymeric additives disclosed in U.S. Patent No. 4,077,893 are hydrogenated star-shaped polymers which are reacted first with an unsaturated carboxylic acid or derivative thereof and then with an alkane polyol. The polymeric additives disclosed in U.S. Patent No. 4,141,847 are hydrogenated star-shaped polymers which are reacted first with an unsaturated carboxylic acid or derivative thereof and then with an amine. Polymeric additives disclosed in U.S. Patent No. 4,427,834 are ones wherein one or more of the arms of a star-shaped polymer such as one of those disclosed in U.S. Patents Nos. 4,116,917 and 4,156,673 is, effectively, replaced with an arm prepared by polymerising a nitrogen-containing monomer. Star-shaped polymers wherein all of the arms are homopolymers of isoprene, which star-shaped polymers are in accordance with U.S. Patents Nos. 4,116,917 and 4,156,673 are commercially available and commonly used as VI improvers.

As is well known in the prior art, thickening efficiency of a polymeric additive has, heretofore, generally been the principle, and sometimes the sole consideration in its selection for use as a VI improver. Particularly, polymeric additives which significantly increase the high temperature kinematic viscosity without significantly increasing the low temperature kinematic viscosity have been sought. Emphasis was, then, given to obtaining a good VI improver based upon temperatures specified in ASTM D2270, and little consideration has been given to the kinematic viscosity at even higher temperatures, such as 150 °C. Now, however, with the current emphasis on smaller, more compact, engines in which lubricating oils are exposed to even higher operating temperatures, it is becoming important to consider viscosities at these higher temperatures in selecting VI improvers.

Recently, it has been discovered that certain hydrogenated, asymmetric radial polymers, e.g. those disclosed in U.S. Patent No. 4,849,481, yield particularly effective VI improvers and offer improved high temperature kinematic viscosities. U.S. Patent No. 4,849,481 discloses hydrogenated, asymmetric radial polymers comprising a plurality of arms, some of which are polymers of one or more hydrogenated conjugated diolefins and others of which are block copolymers comprising a polymeric block containing predominantly one or more monoalkenyl aromatic hydrocarbon monomer units and a polymeric block containing predominantly one or more hydrogenated conjugated diolefin monomer units. These asymmetric radial polymers are prepared by first coupling a suitable blend of living polymers in the same manner used, generally, to prepare star-shaped polymers and then selectively hydrogenating the conjugated diolefin portions of the radial polymers. As indicated in U.S. Patent No. 4,849,481, these polymers do offer enhanced kinematic viscosities at higher temperatures, such as 150 °C, and it is expected that their use in engine oil compositions for the smaller engines would offer significantly improved performance. The need remains, however, for further improvement in high temperature kinematic viscosities and it is always desirable to achieve more readily accessible methods for obtaining suitable results.

U.S. Patent No. 4,898,914 and EP-A-215 501 disclose functionalised selectively hydrogenated block copolymers of the formula Bₙ(AB)ₒAₚ, where n is 0 or an integer of at least 1, o is an integer of at least 1, and p is 0 or an integer of at least 1, A is predominantly a polymerised monoalkenyl aromatic hydrocarbon block and B, prior to hydrogenation, is predominantly a polymerised conjugated diene hydrocarbon block, to which copolymer has been grafted at least one electrophilic graftable molecule or electrophile wherein substantially all of the graftable molecules are grafted to the block copolymer in the monoalkenyl aromatic hydrocarbon block. Structural formulae specifically listed include A-B, A-B-A, A-B-A-B, B-A, B-A-B, B-A-B-A and (AB)_{0, 1, 2} ...BA. Specifically listed conjugated dienes comprise 1,3-butadiene, 2-methyl-1,3-butadiene (isoprene), 2,3-dimethyl-1,3-butadiene, 1,3-pentadiene and 1,3-hexadiene, of which 1,3-butadiene is listed as preferred. Preferred monoalkenyl aromatic hydrocarbons are vinyl-aromatic hydrocarbons of which styrene, o-methylstyrene, p-methylstyrene, p-tert.butylstyrene, 1,3-dimethylstyrene, alphamethylstyrene, vinyl naphthalene and vinylanthracene are listed, styrene being preferred. Preferred electrophiles include carbon dioxide, ethylene oxide, aldehydes, ketones, carboxylic acids and salts and esters thereof, arylhalides, epoxides, sulphur, boron alkoxides, isocyanates, sulphonates and various silicon compounds. In Examples 1 to 14, the electrophile is carbon dioxide.

The modified block copolymers of U.S. Patent No. 4,898,914 and EP-A-215,501 are stated to be suitable for any purpose for which the unmodified base polymer was formerly used, e.g. as adhesives and sealants or compounded and extruded or moulded in any convenient manner, and they are stated to be thermally stable, to have a low residual unsaturation, to be excellent in appearance characteristics, melt-flow characteristics and mechanical properties such as tensile strength and impact resistance.

It is nowhere suggested in U.S. Patent No. 4,898,914 or EP-A-215,501 that any polymer described therein might be suitable for incorporation in any oil composition.

Surprisingly it has now been discovered that certain of the polymers within the ambit of the disclosures of U.S. Patent No. 4,898,914 and EP-A-215,501 have utility as viscosity index (VI) improvers in oil compositions.

In accordance with the present invention, there is provided an oil composition comprising a major amount of an oil and a minor amount of a selectively hydrogenated, carboxyl functionalised block copolymer which, prior to hydrogenation, is a diblock copolymer consisting of a monoalkenyl aromatic hydrocarbon polymer block and a conjugated diolefin polymer block, said block copolymer containing, as functional groups, in the monoalkenyl aromatic hydrocarbon polymer block thereof, carboxylic acid, metal-acid salt or ester groups. The term "carboxyl functionality" as used herein includes both its acidic and non-acidic forms.

The selectively hydrogenated, carboxyl functionalised block copolymer is derived from a block copolymer consisting of a polymeric block containing at least 85 per cent by weight monoalkenyl aromatic hydrocarbon monomer units and a polymeric block containing at least 85 per cent by weight conjugated diolefin monomer units. The block copolymer is selectively hydrogenated such that at least 80% of the ethylenic unsaturation initially contained in the polymer is converted or saturated and the block copolymer is functionalised by incorporating a carboxyl functionality substantially into the polymeric block containing at least 85 per cent by weight monoalkenyl aromatic hydrocarbon monomer units.

In the block copolymers useful in the present invention, the weight average molecular weight of the monoalkenyl aromatic hydrocarbon polymer blocks is preferably in the range from 500 to 50,000, whilst the weight average molecular weight of the conjugated diolefin polymer blocks is preferably in the range from 10,000 to 150,000.

According to the disclosures of U.S. Patent No. 4,898,914 and EP-A-215,501, the carboxyl functionality in the block copolymers useful in the present invention may be incorporated by reacting CO₂ with a block copolymer containing metal atoms in the monoalkenyl aromatic hydrocarbon polymer block. Thus the block copolymer useful in the present invention may be prepared by first metalizing a previously prepared block copolymer by reacting the same with a suitable metalization agent such as alkyl lithium R(Li)ₓ. Generally, the metalization will be accomplished in the presence of a suitable polar metalization promoter such as a tertiary amine, a bridgehead monoamine, an ether or a metal alkoxide. After the polymer is metalated, the same will then be reacted with CO₂ to incorporate an acid salt of the metal contained in the metalization compound and then neutralized to form a carboxylic acid radical.

The block copolymers useful in the present invention will generally have 1,2-microstructures prior to hydrogenation in the range from 7 to 100 per cent.

When the acid form of the carboxyl functionality is to be used, the functional group will be predominantly in the acid form. Alternatively, when the non-acid form of the carboxyl functionality is to be used, the functional group will be predominantly in the non-acid form. The term "non-acid" as used herein, denotes functional groups, e.g. metal-acid salts and esters, having a pH equal to or greater than 7.

Copolymers useful in the present invention will preferably be functionalised to the extent of from 0.1 to 40 per cent by weight carboxyl functionality, based on the total weight of aromatic monomer in the copolymer.

In general, any of the methods well known in the prior art may be used to produce the diblock copolymers which may be subsequently selectively hydrogenated, then carboxyl functionalised and then used as VI improvers in the present invention.

Suitable monoalkenyl aromatic hydrocarbon monomers include aryl-substituted olefins such as styrene, various alkyl-substituted styrenes, such as o-methylstyrene, p-methylstyrene, p-tert.butyl styrene, 1,3-dimethylstyrene and alpha-methyl styrene, alkoxy-substituted styrenes, vinyl naphthalene, and alkyl-substituted vinyl naphthalenes. Styrene is the most preferred monoalkenyl aromatic hydrocarbon monomer.

Suitable conjugated diolefins include C₄₋₈ conjugated diolefins, including 1,3-butadiene, 2-methyl-1,3-butadiene (isoprene), 2,3-dimethyl-1,3-butadiene, 1,3-pentadiene and 1,3-hexadiene. Mixtures of such conjugated diolefins may also be used. Isoprene is the most preferred conjugated diolefin.

In general, the selectively hydrogenated and functionalised block copolymer useful in this invention may be used in a broad range of hydrocarbons to improve the VI thereof. The selectively hydrogenated, functionalised block copolymer of the present invention is particularly useful when added to a variety of oils including crude oils, mineral and synthetic lubricating oils, fuel oils, diesel oils, hydraulic oils and automatic transmission oils to produce oil compositions having improved viscosity index characteristics. The oils may be paraffinic, naphthenic or aromatic. The block copolymer useful in this invention is particularly useful when used in hydrocarbon liquids, particularly oils, with non-saturated (aromatic) and non-polar groups as determined by clay gel analysis in the range from 0 to 35 per cent by weight. This, then, covers a range of base oil stocks from synthetic oils such as polyalphaolefin oils to natural NVI oils. In general, the block copolymer useful in this invention will be effective to improve viscosity index characteristics at concentrations in the range from 0.1 to 15 per cent by weight although concentrations in the range from 0.1 to 2 per cent by weight are most effective, the percentages by weight being based on the weight of the oil composition. The higher concentrations, might typically be those of a lubricant concentrate, which would normally be diluted with additional hydrocarbon oil prior to actual use.

In general, oils containing the VI improver of this invention may contain other additives such as dispersants, detergents, anti-oxidants, extreme pressure additives and pour point depressants. These additives are not, however, necessary for obtaining the improved viscosity index characteristics offered by the viscosity index improver of this invention.

In a preferred embodiment of the present invention, a diblock copolymer consisting of a single polymeric block containing at least 85 per cent by weight monoalkenyl aromatic hydrocarbon monomer units and a single polymeric block containing at least 85 per cent by weight conjugated diolefin monomer units will be selectively hydrogenated and functionalised so as to contain a carboxyl functionality in the monoalkenyl aromatic hydrocarbon polymer block and used as a VI improver. The carboxyl functionality will, preferably, be in the all acid or non-acid form. The weight average molecular weight of the monoalkenyl aromatic hydrocarbon polymer block in the diblock copolymer is preferably in the range from 500 to 50,000, more preferably from 10,000 to 40,000, and the weight average molecular weight of the conjugated diolefin polymer block is preferably in the range from 10,000 to 150,000, more preferably from 61,000 to 135,000. The molecular weight of each block will be controlled such that the weight ratio of total monoalkenyl aromatic hydrocarbon monomer units to total conjugated diolefin monomer units in the diblock copolymer, based on the weight average molecular weight of the respective polymer blocks, is preferably in the range from 0.05:1 to 1:1, more preferably from 0.1:1 to 0.7:1. In the preferred embodiment, the viscosity index improver may be used in a fully formulated SAE 10W40 multigrade overbased engine oil formulation. The SAE 10W40 overbased oil formulation will preferably contain from 8 to 10 per cent by weight of a standard SG/CD additive package and from 0.1 to 2.0 per cent by weight of the modified diblock copolymer. The modified diblock copolymer will preferably contain from 0.1 to 40, more preferably from 0.5 to 11, per cent by weight (based on the total weight of aromatic monomer units) of carboxyl functional groups. Preferably, the modified diblock copolymer will be hydrogenated such that at least 95% of the initial ethylenic unsaturation is converted (saturated). In a most preferred embodiment of the present invention, the monoalkenyl aromatic monomer will be styrene and the conjugated diolefin will be isoprene.

The invention will be further understood from the following illustrative examples.

In the examples which follow, and elsewhere in this specifiction, unless otherwise indicated, percentages are percentages by weight.

### Example 1

In this example, a selectively-hydrogenated diblock copolymer containing a polystyrene block having a weight average molecular weight of 37,000 and a polyisoprene block having a weight average molecular weight of 65,000 which was modified to contain 1.12 per cent by weight carboxyl functionality (in the all acid form), based on total weight of aromatic monomer via the lithium metalation technique described in U.S. Patent No. 4,898,914 and EP-A-215,501 discussed above, was used in the formulation of an SAE 10W40 multigrade lubricating oil composition. The base oil used in the oil composition contained a ratio of 75 parts of "HVI 100N" oil (trade designation, available ex Shell Oil Company, USA) (a bright and clear high viscosity index base oil having viscosity at 40 °C of 20.0 to 21.0 mm²/s (ASTM D445), viscosity index of 88 to 93 (ASTM D2270) and minimum flash point of 190.6 to 196 °C (ASTM D92)) to 25 parts "HVI 250N" oil (trade designation, available ex Shell Oil Company, USA) (a bright and clear high viscosity index base oil having viscosity at 40 °C of 50.7 to 54.0 mm²/s (ASTM D445), viscosity index of 89 to 96 (ASTM D2270) and minimum flash point of 221 °C (ASTM D92)) and the oil composition contained 7.75 per cent by weight of a standard SF/CC commercially available additive package and 0.5 per cent by weight "Acryloid 154-70" (Trade Mark). After preparation, the SAE 10W40 oil composition was tested to determine its viscosity index; cold cranking simulator (CCS) viscosity at -20 °C; engine oil pumpability at -25 °C using the TP1 mini-rotary viscometer (MRV) method according to ASTM D3829; high temperature, high shear rate (HTHSR) viscosity at 150 °C and 1x10⁶ seconds⁻¹ using the tapered bearing simulator (TBS), and its mechanical shear stability using the so-called diesel injector rig test according to ASTM D3945. The results obtained are shown in Table I under the respective headings VI; CCS-20 °C cP (10⁻³ x Pa s); TP1/MRV -25 °C cP (10⁻³ x Pa s); TBS 150 °C cP (10⁻³ x Pa s) and DIN % vis loss.

### Example 2

In this example, the run of Example 1 was repeated except that a selectively hydrogenated diblock copolymer having a styrene polymer block with a weight average molecular weight of 40,000 and isoprene polymer block with a weight average molecular weight of 107,000 were substituted for the selectively hydrogenated diblock copolymer used in Example 1. Also, the functionality on the polymer was reduced from 1.12 per cent by weight to 0.5 per cent by weight, based on total weight of aromatic monomer, in this example. After the SAE 10W40 oil was prepared, the same properties were then determined using the same methods as in Example 1. The results obtained are summarised in Table I.

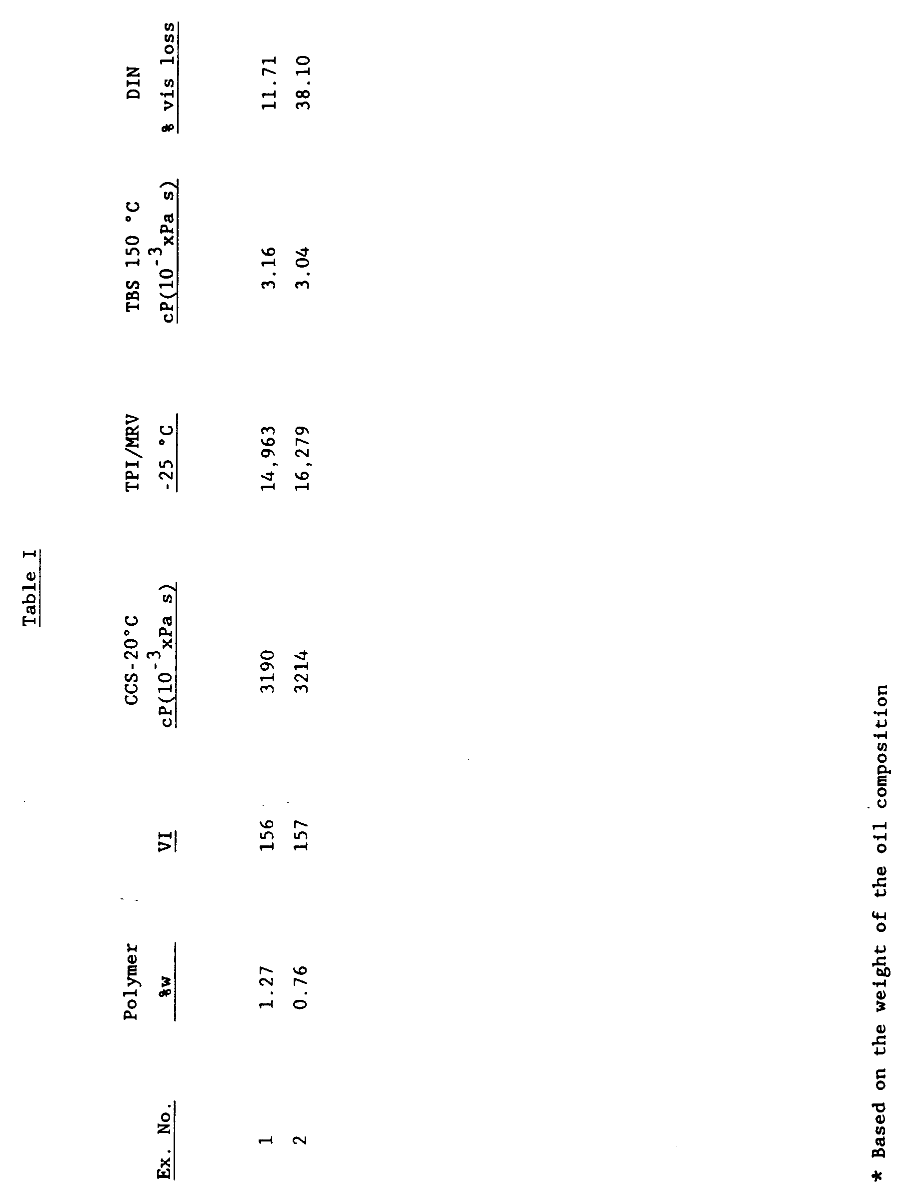

### Examples 3 to 5

In these Examples, two salts and an ester of a selectively hydrogenated diblock copolymer containing a polystyrene block having a weight average molecular weight of 37,000 and an isoprene polymer block having a weight average molecular weight of 107,000 were prepared and tested for kinematic viscosity at 40 °C, 100 °C and 150 °C and for reduced viscosity at 150 °C. The salt functionalities incorporated were the lithium and sodium salts and the ester functionality was the methyl ester. These functionalities were substantially incorporated into the styrene polymer block according to U.S. Patent No. 4,898,914 and EP-A-215,501. The lithium salt was formed by direct metallation of the selectively hydrogenated diblock copolymer while the sodium salt and the methyl ester were formed by converting the metallated product to the acid version. The acid version was then converted to the corresponding sodium salt by reacting with sodium hydroxide and to the corresponding methyl ester by first neutralising the acid functionality with tetrabutyl ammonium hydroxide and then reacting with methyl iodide. For comparative purposes, the kinematic and reduced viscosities of the unfunctionalised selectively hydrogenated diblock copolymer (Comparative Example A) were determined at the same temperatures. The kinematic and reduced viscosities in all cases were determined at a polymer concentration of 1.73 per cent by weight in an "HVI 100N" oil. The concentration (functionality) of Na salt was 1.3 per cent by weight and the ester concentration (functionality) was 1.12 per cent by weight, the percentages by weight being based on total weight of aromatic monomer. The results obtained are summarised in Table II.

**Table II**

| Kinematic Viscosity, cP (10⁻³ x Pa s) | | | | | |
|---|---|---|---|---|---|
| Ex. No. | Functionality | 40 °C | 100 °C | 150 °C | Reduced Viscosity |
| 3 | Li Salt | - | - | - | - |
| 4 | Na Salt | 101.0 | 17.0 | 7.2 | - |
| 5 | Methyl ester | 123.7 | 18.6 | 7.2 | 1.05 |
| Comp. Ex. A | None | 111.7 | 18.2 | 4.9 | 0.55 |

As is apparent from the data in Table II, the kinematic viscosity at 150 °C is significantly improved from 4.9 to 7.2 with the functionalised copolymers of this invention, whilst the reduced viscosity is significantly improved with the methyl ester functionalised copolymer. Although inadvertently unrecorded, a similarly significant improvement was obtained with the lithium and sodium salts carboxyl functionalised copolymers.

### Examples 6 and 7

In these examples, the reduced viscosity of a modified, selectively hydrogentated diblock copolymer was determined at two different functionalisation levels at 150 °C. The selectively hydrogenated diblock copolymer actually used in this example had a polystyrene block having a weight average molecular weight of 37,000 and a conjugated diolefin polymer block having a weight average molecular weight of 65,000 and the polymer was functionalised using the lithium metalization technique described in U.S. Patent No. 4,898,914 and EP-A-215,501. As is well known, the reduced viscosity is designed to permit a comparison of properties, such as thickening efficiency of a viscosity index improver independent of polymer concentration and solvent viscosity effects. In the examples, the reduced viscosity was determined at a carboxylic acid functionality level (all acid form) of 0.22 and 1.3 per cent by weight based on total polymer (0.6 and 3.6 per cent by weight based on total weight of aromatic monomer) and at a polymer concentration in oil of 1.73 per cent by weight based on total oil composition. The oil used in preparing each of the compositions was an "HVI 100N" lubricating oil and the compositions were prepared by dissolving the polymer in the oil on each occasion. The results obtained are summarised in Table III which shows the oil composition by designating the amount of functional group on the polymer and the reduced viscosity under a column headed "Reduced Viscosity". For purposes of comparison, the results obtained on a composition prepared with the unfunctionalised selectively hydrogenated block copolymer (Comparative Example B) having the same molecular weight and contained in the composition at the same per cent by weight was obtained and this result is also reported in Table III.

**Table III**

| Carboxyl Function Group | | | |
|---|---|---|---|
| Ex. No. | %w, based on total polymer | %w, based on total wt. aromatic monomer | Reduced Viscosity |
| Comp. Ex. B | 0 | 0 | 4.05 |
| 6 | 0.22 | 0.6 | 4.81 |
| 7 | 1.3 | 3.6 | 6.60 |

As is apparent from the data summarised in Table III, the reduced viscosity at 150 °C is significantly improved with the carboxyl functionalised polymer of this invention and the improvement increases with increased carboxyl functionality in the polymer.

### Examples 8 and 9

In these examples, the runs completed in Examples 6 and 7 were repeated except that a selectively hydrogenated diblock copolymer having a single styrene polymer block having a weight average molecular weight of 40,000 and a single isoprene polymer block having a weight average molecular weight of 107,000 was substituted for the polymer used in Examples 6 and 7 and the tests were conducted at different carboxyl functional group levels of 0.5 and 0.8 per cent by weight based on total polymer (1.8 and 2.9 per cent by weight based on total weight of aromatic monomer). After the oil compositions were prepared, each was tested for the same property as was evaluated in Examples 6 and 7 and the results obtained are summarised in Table IV. Again, for comparison purposes, the same property was also determined for a composition containing the unfunctionalised, selectively hydrogenated block copolymer (Comparative Example C) and the result is also reported in Table IV.

**Table IV**

| Carboxyl Function Group | | | |
|---|---|---|---|
| Ex. No. | %w, based on total polymer | %w, based on total wt. aromatic monomer | Reduced Viscosity |
| Comp. Ex. C | 0 | 0 | 5.33 |
| 8 | 0.5 | 1.8 | 16.35 |
| 9 | 0.8 | 2.9 | 21.66 |

As is apparent from the data summarised in Table IV, the reduced viscosity at 150 °C is significantly improved by the incorporation of a carboxyl functionality into the aromatic hydrocarbon monomer unit polymer blocks. It is also apparent that increasing the amounts of carboxyl functionality significantly further improves the reduced viscosity at 150 °C. A comparison of the result summarised in Tables III and IV illustrates that the reduced viscosity at 150 °C is much more improved when a modified, selectively hydrogenated block copolymer having increased molecular weight is used.

### Examples 10 to 15

In these Examples, six selectively hydrogenated isoprene-styrene block copolymers were carboxylated using the lithium metalation technique described in U.S. Patent No. 4,898,914 and EP-A-215,501. The block copolymers had varying molecular weights of hydrogenated isoprene blocks, and of styrene blocks. Varying amounts of carboxyl functionality (in the all acid forms) in the styrene blocks were formulated into SAE 10W40 multigrade oil compositions in the same manner as was used in Example 1. In each composition the polymer was used at the concentration required to produce an SAE 10W40 oil. The base oil comprised 75 parts by weight of "HVI 100N" oil and 25 parts by weight "HVI 250N" oil and the oil composition contained 7.75 per cent by weight, based on oil, of a standard SF/CC commercially available additive package and 0.5 per cent by weight, based on oil, of "Acryloid 154-70" (Trade Mark). After preparation, the SAE 10W40 oil compositions were tested to determine the cold cranking simulator (CCS) viscosity at -25 °C; the engine oil pumpability at -25 °C using the TP1 mini-rotary viscometer (MRV) method according to ASTM D4684 and the tapered bearing simulator (TBS) viscosity at 1 X 10⁻⁶s⁻¹ using the procedure described in ASTM D4683. The results obtained are summarised in Table V under the headings titled CCS -25 °C, cP (10⁻³ x Pa s); TP-1-MRV, cP (10⁻³ x Pa s); and TBS, cP (10⁻³ x Pa s). Table V also shows the amount of polymer required to produce the SAE 10W40 oil composition in per cent by weight of polymer under the heading, polymer %w; the weight average molecular weight (M_{w}) of the hydrogenated isoprene (EP) and the styrene (S) polymer blocks x10⁻³ under the heading M_{w} x 10⁻³, and the amount of carboxyl functionality in mol% (%w) based on the mol (wt) of styrene in the polymer, under the heading carboxyl functional mol% (%w).

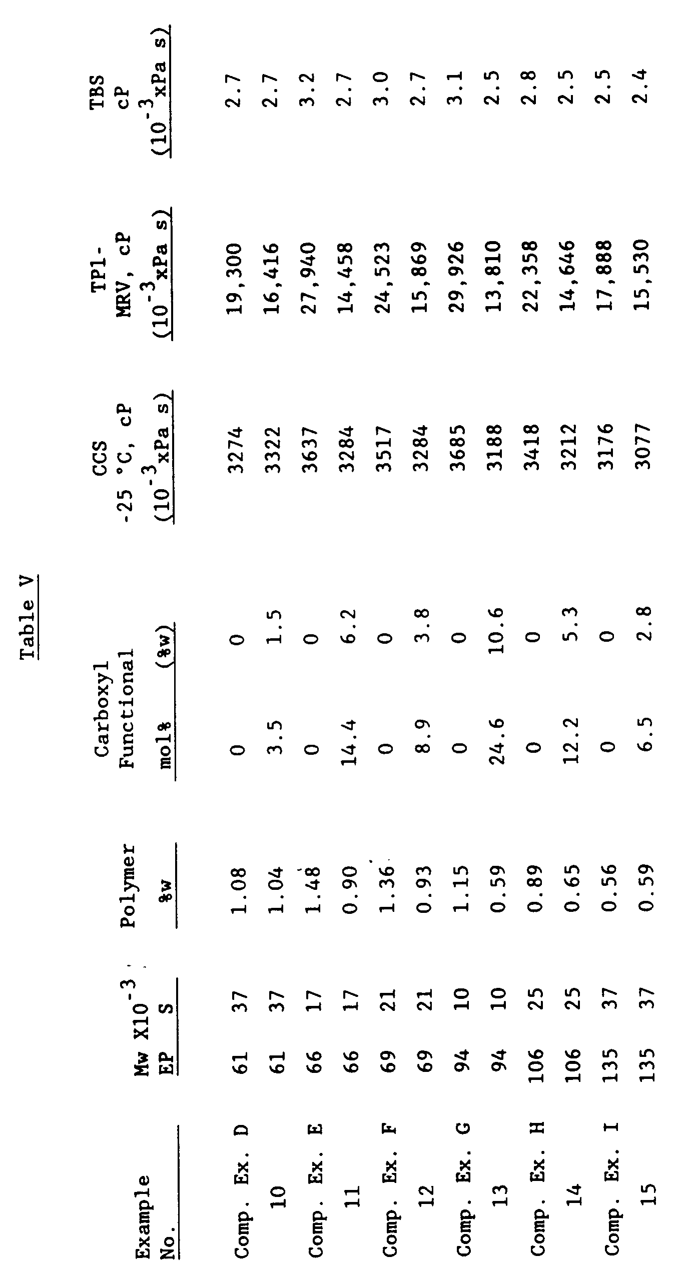

### Comparative Examples D to I

In these Examples, the compositions were prepared as in Examples 10 to 15, with the exception that the block copolymers were unfunctionalised. After the SAE 10W40 oil compositions were prepared, the same properties thereof were determined in the same manner as was used in Examples 10 to 15. The results obtained are summarised in Table V.

As is apparent from the data summarised in Table V, the CCS, TP1-MRV and TBS viscosity of the oil compositions containing the carboxyl functionalised block copolymer of this invention were, generally, less than those of the oil compositions containing the unfunctionalised polymer. Also, with one exception, the amount of polymer required to produce the SAE 10W40 oil was less with the functionalised block copolymer. This then can be interpreted to mean that functionalisation generally improves thickening efficiency at the temperatures conventionally used in preparing multigrade oil compositions.

### Example 9

In this Example, the kinematic viscosities of the six block copolymers used in Examples 10 to 15 and the six block copolymers used in Comparative Examples D to I were determined in a base oil stock identical to that used in Examples 10 to 15 and Comparative Examples D to I. In each case, the polymer was used at a concentration of 1.2 per cent by weight, based on the amount of oil. The kinematic viscosities were determined in cSt (mm²/s) at 40 °C, 100 °C and 150 °C. The results obtained are summarised in Table VI which also shows the weight average molecular weights (M_{w}) of the hydrogenated isoprene (EP) and styrene (S) polymer blocks x 10⁻³ under the heading, M_{w} x 10⁻³, and the amounts of carboxyl functionality in the monoalkenyl aromatic polymer unit under the heading, carboxyl functional, mol% (%w).

As is apparent from the data summarised in Table VI, the kinematic viscosity at 150 °C improved each time the block copolymer was functionalised with carboxyl functionality. Moreover, the improvement in kinematic viscosity at 150 °C became more profound with higher block copolymer molecular weights. As is also apparent from the data summarised in Table VI, the kinematic viscosity at 100 °C was generally improved by carboxyl functionalisation of the monoalkenyl aromatic polymer units.

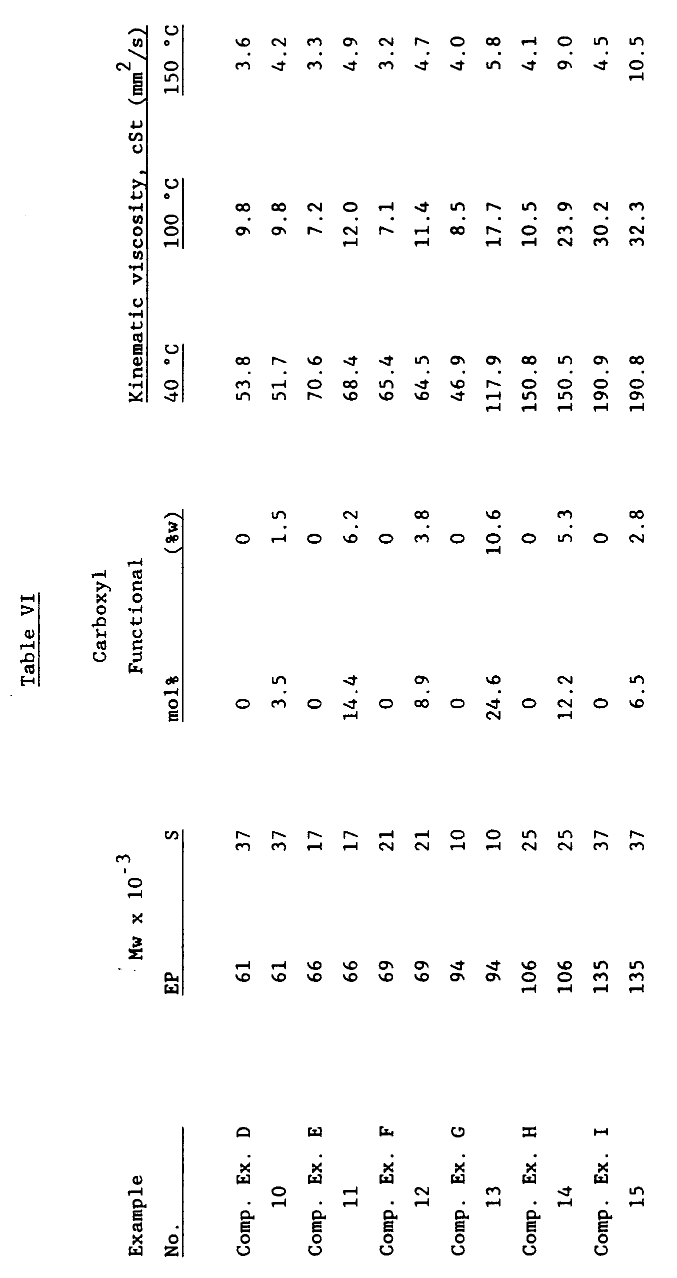

## Claims (Claims for the following Contracting State(s): BE, DE, FR, GB, IT, NL)

1. An oil composition comprising a major amount of an oil and a minor amount of a selectively hydrogenated, carboxyl functionalised block copolymer which, prior to hydrogenation, is a diblock copolymer consisting of a monoalkenyl aromatic hydrocarbon polymer block and a conjugated diolefin polymer block, said block copolymer containing, as functional groups, in the monoalkenyl aromatic hydrocarbon polymer block thereof, carboxylic acid, metal-acid salt or ester groups.

2. A composition according to claim 1, wherein the carboxyl functionality is present in a concentration from 0.1 to 40 per cent by weight, based on the total weight of monoalkenyl aromatic hydrocarbon monomer in said block copolymer.

3. A composition according to claim 1 or 2, wherein the metal-acid salt is a salt of lithium or sodium.

4. A composition according to claim 1 or 2, wherein the ester groups are methyl ester groups.

5. A composition according to any one of the preceding claims, wherein, in said block copolymer, the monoalkenyl aromatic hydrocarbon polymer block has a weight average molecular weight in the range from 500 to 50,000, and the conjugated diolefin polymer block has a weight average molecular weight in the range from 10,000 to 150,000.

6. A composition according to any one of the preceding claims, wherein the monoalkenyl aromatic hydrocarbon is styrene.

7. A composition according to any one of the preceding claims, wherein the conjugated diolefin is isoprene.

8. A composition according to any one of the preceding claims, wherein said block copolymer is present in an amount from 0.1 to 15 per cent by weight, based on the weight of the composition.

9. A composition according to claim 8, wherein said block copolymer is present in an amount from 0.1 to 2 per cent by weight, based on the weight of the composition.

## Claims (Claims for the following Contracting State(s): ES)

1. A process for the preparation of an oil composition which comprises mixing a major amount of an oil and a minor amount of a selectively hydrogenated, carboxyl functionalised block copolymer which, prior to hydrogenation, is a diblock copolymer consisting of a monoalkenyl aromatic hydrocarbon polymer block and a conjugated diolefin polymer block, said block copolymer containing, as functional groups, in the monoalkenyl aromatic hydrocarbon polymer block thereof, carboxylic acid, metal-acid salt or ester groups.

2. A process according to claim 1, wherein the carboxyl functionality is present in a concentration from 0.1 to 40 per cent by weight, based on the total weight of monoalkenyl aromatic hydrocarbon monomer in said block copolymer.

3. A process according to claim 1 or 2, wherein the metal-acid salt is a salt of lithium or sodium.

4. A process according to claim 1 or 2, wherein the ester groups are methyl ester groups.

5. A process according to any one of the preceding claims, wherein, in said block copolymer, the monoalkenyl aromatic hydrocarbon polymer block has a weight average molecular weight in the range from 500 to 50,000, and the conjugated diolefin polymer block has a weight average molecular weight in the range from 10,000 to 150,000.

6. A process according to any one of the preceding claims, wherein the monoalkenyl aromatic hydrocarbon is styrene.

7. A process according to any one of the preceding claims, wherein the conjugated diolefin is isoprene.

8. A process according to any one of the preceding claims, wherein said block copolymer is present in an amount from 0.1 to 15 per cent by weight, based on the weight of the composition.

9. A process according to claim 8, wherein said block copolymer is present in an amount from 0.1 to 2 per cent by weight, based on the weight of the composition.

## Patentansprüche (Patentansprüche für folgende(n) Vertragsstaat(en): BE, DE, FR, GB, IT, NL)

1. Eine Ölzusammensetzung, umfassend eine größere Menge eines Öls und eine kleinere Menge eines selektiv hydrierten, carboxyl-funktionalisierten Blockcopolymers, das vor dem Hydrieren ein Diblockcopolymer ist, das aus einem monoalkenylaromatischen Kohlenwasserstoffpolymerblock und einem konjugierten Diolefinpolymerblock besteht, wobei das besagte Blockcopolymer als funktionelle Gruppen im monoalkenylaromatischen Kohlenwasserstoffpolymerblock Carbonsäuregruppen, Gruppen eines Metallsalzes einer Säure oder Estergruppen enthält.

2. Eine Zusammensetzung nach Anspruch 1, in welcher die Carboxylfunktionalität in einer Konzentration von 0,1 bis 40 Gewichtsprozent, bezogen auf das Gesamtgewicht des monoalkenylaromatischen Kohlenwasserstoffmonomers in dem genannten Blockcopolymer vorliegt.

3. Eine Zusammensetzung nach Anspruch 1 oder 2, in welcher das Metallsalz ein Lithium- oder Natriumsalz ist.

4. Eine Zusammensetzung nach Anspruch 1 oder 2, in welcher die Estergruppen Methylestergruppen sind.

5. Eine Zusammensetzung nach einem der vorstehenden Ansprüche, in welcher in dem genannten Blockcopolymer der monoalkenylaromatische Kohlenwasserstoffpolymerblock ein durchschnittliches Molekulargewicht (Gewichtsmittel)im Bereich von 500 bis 50000 und der konjugierte Diolefinpolymerblock ein durchschnittliches Molekulargewicht (Gewichtsmittel) im Bereich von 10000 bis 150000 aufweist.

6. Eine Zusammensetzung nach einem der vorstehenden Ansprüche, in welcher der monoalkenylaromatische Kohlenwasserstoff Styrol ist.

7. Eine Zusammensetzung nach einem der vorstehenden Ansprüche, in welcher das konjugierte Diolefin Isopren ist.

8. Eine Zusammensetzung nach einem der vorstehenden Ansprüche, in welcher das genannte Blockcopolymer in einer Menge von 0,1 bis 15 Gewichtsprozent, bezogen auf das Gewicht der Zusammensetzung, vorliegt.

9. Eine Zusammensetzung nach Anspruch 8, in welcher das genannte Blockcopolymer in einer Menge von 0,1 bis 2 Gewichtsprozent, bezogen auf das Gewicht der Zusammensetzung, vorliegt.

## Patentansprüche (Patentansprüche für folgende(n) Vertragsstaat(en): ES)

1. Ein Verfahren zur Herstellung einer Ölzusammengetzung, umfassend das Vermischen einer größeren Menge eines Öls und einer kleineren Menge eines selektiv hydrierten, carboxylfunktionalisierten Blockcopolymers, das vor dem Hydrieren ein Diblockcopolymer ist, das aus einem monoalkenylaromatischen Kohlenwasserstoffpolymerblock und einem konjugierten Diolefinpolymerblock besteht, wobei das besagte Blockcopolymer als funktionelle Gruppen im monoalkenylaromatischen Kohlenwasserstoffpolymerblock Carbonsäuregruppen, Gruppen eines Metallsalzes einer Säure oder Estergruppen enthält.

2. Ein Verfahren nach Anspruch 1, in welchem die Carboxylfunktionalität in einer Konzentration von 0,1 bis 40 Gewichtsprozent, bezogen auf das Gesamtgewicht des monoalkenylaromatischen Kohlenwasserstoffmonomers in dem genannten Blockcopolymer vorliegt.

3. Ein Verfahren nach Anspruch 1 oder 2, in welchem das Metallsalz ein Lithium- oder Natriumsalz ist.

4. Ein Verfahren nach Anspruch 1 oder 2, in welchem die Estergruppen Methylestergruppen sind.

5. Ein Verfahren nach irgendeinem der vorstehenden Ansprüche, in welchem in dem genannten Blockcopolymer der monoalkenylaromatische Kohlenwasserstoffpolymerblock ein durchschnittliches Molekulargewicht (Gewichtsmittel)im Bereich von 500 bis 50000 und der konjugierte Diolefinpolymerblock ein durchschnittliches Molekulargewicht (Gewichtsmittel) im Bereich von 10000 bis 150000 aufweist.

6. Ein Verfahren nach irgendeinem der vorstehenden Ansprüche, in welchem der monoalkenylaromatische Kohlenwasserstoff Styrol ist.

7. Ein Verfahren nach irgendeinem der vorstehenden Ansprüche, in welchem das konjugierte Diolefin Isopren ist.

8. Ein Verfahren nach irgendeinem der vorstehenden Ansprüche, in welchem das genannte Blockcopolymer in einer Menge von 0,1 bis 15 Gewichtsprozent, bezogen auf das Gewicht der Zusammensetzung, vorliegt.

9. Ein Verfahren nach Anspruch 8, in welchem das genannte Blockcopolymer in einer Menge von 0,1 bis 2 Gewichtsprozent, bezogen auf das Gewicht der Zusammensetzung, vorliegt.

## Revendications (Revendications pour l'(les) Etat(s) contractant(s) suivant(s): BE, DE, FR, GB, IT NL)

1. Une composition d'huile renfermant une quantité prépondérante d'une huile et une quantité plus faible d'un copolymère séquencé à fonction carboxyle, sélectivement hydrogéné, qui, avant hydrogénation est un copolymère diséquencé constitué d'une séquence polymère de type hydrocarbure aromatique monoalcénylé et une séquence polymère de type dioléfine conjuguée, ledit copolymère séquencé renfermant sous forme de groupes fonctionnels, dans sa séquence polymère de type hydrocarbure aromatique monoalcénylé, des groupes ester ou sel acide métallique d'acide carboxylique.

2. Une composition selon la revendication 1, dans laquelle la fonctionnalité carboxyle est présente en une concentration de 0,1 à 40% en poids, en se basant sur le poids total du monomère de type hydrocarbure aromatique monoalcénylé dans ledit copolymère séquencé.

3. Une composition selon la revendication 1 ou 2, dans laquelle le sel métallique acide est un sel de lithium ou de sodium.

4. Une composition selon la revendication 1 ou 2, dans laquelle les groupes esters sont des groupes esters méthyliques.

5. Une composition selon l'une quelconque des revendications précédentes, dans laquelle, dans ledit copolymère séquencé, la séquence polymère de type hydrocarbure aromatique monoalcénylé possède un poids moléculaire moyen en poids dans la gamme de 500 à 50 000, et la séquence polymère dioléfinique conjuguée présente un poids moléculaire moyen en poids dans la gamme de 10 000 à 150 000.

6. Une composition selon l'une quelconque des revendications précédentes, dans laquelle l'hydrocarbure aromatique monoalcénylé est le styrène.

7. Une composition selon l'une quelconque des revendications précédentes, dans laquelle la dioléfine conjuguée est l'isoprène.

8. Une composition selon l'une quelconque des revendications précédentes, dans laquelle ledit copolymère séquencé est présent en une quantité de 0,1 à 15% en poids, en se basant sur le poids de la composition.

9. Une composition selon la revendication 8, dans laquelle le copolymère séquencé est présent en une quantité de 0,1 à 2% en poids, en se basant sur le poids de la composition.

## Revendications (Revendications pour l'(les) Etat(s) contractant(s) suivant(s): ES)

1. Un procédé pour la préparation d'une composition d'huile selon lequel on mélange une quantité prépondérante d'une huile et une quantité plus faible d'un copolymère séquencé à fonction carboxyle, sélectivement hydrogéné, qui, avant l'hydrogénation, est un copolymère diséquencé constitué d'une séquence polymère de type hydrocarbure aromatique monoalcénylé et une séquence polymère de type dioléfine conjuguée, ledit copolymère séquencé renfermant sous forme de groupes fonctionnels, dans sa séquence polymère de type hydrocarbure aromatique monoalcénylé, des groupes ester ou sel acide métallique d'acide carboxylique.

2. Un procédé selon la revendication 1, dans lequel la fonctionnalité carboxyle est présente en une concentration de 0,1 à 40% en poids, en se basant sur le poids total du monomère de type hydrocarbure aromatique monoalcénylé dans ledit copolymère séquencé.

3. Un procédé selon la revendication 1 ou 2, dans lequel le sel métallique acide est un sel de lithium ou de sodium.

4. Un procédé selon la revendication 1 ou 2, dans lequel les groupes esters sont des groupes esters méthyliques.

5. Un procédé selon l'une quelconque des revendications précédentes, dans lequel, dans ledit copolymère séquencé, la séquence polymère de type hydrocarbure aromatique monoalcénylé possède un poids moléculaire moyen en poids dans la gamme de 500 à 50 000, et la séquence polymère dioléfinique conjuguée présente un poids moléculaire moyen en poids dans la gamme de 10 000 à 150 000.

6. Un procédé selon l'une quelconque des revendications précédentes, dans lequel l'hydrocarbure aromatique monoalcénylé est le styrène.

7. Un procédé selon l'une quelconque des revendications précédentes, dans lequel la dioléfine conjuguée est l'isoprène.

8. Un procédé selon l'une quelconque des revendications précédentes, dans lequel ledit copolymère séquencé est présent en une quantité de 0,1 à 15% en poids, en se basant sur le poids de la composition.

9. Un procédé selon la revendication 8, dans lequel le copolymère séquencé est présent en une quantité de 0,1 à 2% en poids, en se basant sur le poids de la composition.
